# EUROPEAN PATENT SPECIFICATION

(11) **EP 3 147 759 B1**
(45) Date of publication and mention of the grant of the patent: **26.06.2019**
(21) Application number: 16190950.2
(22) Date of filing: 14.05.2001
(51) Int. Cl.: G06F 3/033, G06F 1/16, G01C 21/20, G01C 21/36, G01C 17/00, H04W 4/02

(54) **A METHOD AND APPARATUS TO BROWSE AND ACCESS DOWNLOADED CONTEXTUAL INFORMATION**
VERFAHREN UND VORRICHTUNG ZUM DURCHSUCHEN UND FÜR DEN ZUGRIFF AUF HERUNTERGELADENE KONTEXTUELLE INFORMATION
PROCÉDÉ ET APPAREIL POUR NAVIGUER ET ACCÉDER AUX INFORMATIONS CONTEXTUELLES TÉLÉCHARGÉES

(30) Priority: 16.05.2000 US 572677
(43) Date of publication of application: 29.03.2017
(62) Divisional of application: 10160495.7
(73) Proprietor: Nokia Technologies Oy, 02610 Espoo (FI)
(72) Inventor: SUOMELA, Riku, FIN-33200 Tampere (FI)
(74) Representative: Cohausz & Florack

(56) References cited:
- WO-A-97/07467
- WO-A1-98/55833
- GB-A- 2 298 539
- US-A- 5 964 821

## Description

### BACKGROUND OF THE INVENTION

### 1. Field of the Invention

The present invention relates to a device and method for browsing and accessing contextual data in a user device.

### 2. Description of the Related Art

A device and method for presenting information related to objects being addressed is disclosed in PCT references WO 99/42946 and WO 99/42947. According to these references, a system includes a database with geometric descriptions of objects. Based on where the user is and the vector corresponding to where the user is pointing, the system determines the object of interest. For example, if a user is determined to be at a specific location in a city and the user points to a hotel, the vector passes through the geometric description of the hotel in the database. Accordingly, the devices of these references merely determine what space is being addressed and imply that particular objects are being addressed by way of the association of objects to spatial definitions or geometric descriptors in the database.

A problem with these devices is that a user is required to point to a landmark or point of interest and query the system to determine what objects are retrievable in that direction. In other words, the user does not know whether an object is in the database until the user points at the object.

GB 2,298,539 discloses a hand-held device comprising a GPS receiver, a radio-wave triangulation position sensor, a compass and/or an INS system. The hand-held device displays the position of a user on a map of an area including places of interest. The hand-held device also displays a list of nearby places of interest and details of a selected one of them.

US 5,964,821 discloses a navigation system for offering navigational assistance to a mobile user. The navigation system receives GPS position information signals which are processed to determine current position latitude and longitude co-ordinates and direction of travel.

### SUMMARY OF THE INVENTION

It is an object of the present invention to provide a method for accessing data by providing a preview of a collection of virtual objects related to the user's surroundings and allowing easy access to their contents.

According to some, but not necessarily all, embodiments of the invention a hand-held mobile device as claimed in claim 1 is provided.

According to some, but not necessarily all, embodiments of the invention a method as claimed in claim 16 is provided.

A method for browsing and accessing context information with a user equipment is described below, which comprises determining a location of the user equipment using a location service. After the location is determined, the user equipment can download the context information from a database in a network. The contextual information contains information related to actual objects within a neighborhood surrounding the user equipment. The information about each object includes name, geographical location, and URL from which content can be retrieved. The orientation of the user equipment is determined using a compass in the user equipment. Once the orientation is known, a visual user interface is generated at the user equipment for displaying the contextual information that has been downloaded in a virtual representation of the neighborhood of the user equipment. One such representation is a horizontal strip compass display onto which icons of the objects are displayed at positions corresponding to their actual relative directions. Another representation is a plan view, i.e., bird's eye view, of a map onto which object icons are superimposed. To select one of the virtual objects displayed, the user can point to one of the virtual objects in the visual user interface by orienting the user equipment. That is, the user manipulates at least a portion of the user equipment until the front of the user equipment faces the object to be selected. The display shows a target area which is an area in front of the user equipment. A virtual object is selected by orienting the user equipment until the virtual object to be selected is within the target area. Once selected, the virtual object can be opened by actuating an activation button. The content of the selected virtual objects may be stored in the user equipment and/or immediately wirelessly downloaded from a database at the server of the wireless system or from an internet web page. retrieved from the URL associated with the one of the virtual objects. The content, or at least a portion thereof, is then visualized on the display of the user equipment.

In the examples described below, the user equipment may comprise a mobile phone, a personal digital assistant, or a wearable computer with a head-mounted display. The user equipment requires a display, an input device, a compass, and a means for wireless communication with the network in which the contextual data is stored.

Furthermore, either the network or the user equipment must have a location detector for determining the location of the user equipment so that the applicable contextual data can be downloaded.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely
intended to conceptually illustrate the structures and procedures described herein.

### BRIEF DESCRIPTION OF THE DRAWINGS

In the drawings:
Fig. 1 is a schematic diagram showing the user equipment and network according to the' present invention;
Fig. 2 is a signal flow diagram showing the basic method for browsing and accessing contextual data according to the present invention;
Fig. 3a and 3b show a display of a user equipment with contextual data and the user equipment;
Figs. 4a and 4b show the display and user equipment of Figs. 3a and 3b after the user equipment has been reoriented to the right;
Figs. 5a and 5b show the display when more than one virtual object are in a target area of the display;
Fig. 6 shows a display of the user equipment when the user equipment when a map and a linear compass are simultaneously displayed; and
Fig. 7 shows a view from a head mounted display of a user equipment.

### DETAILED DESCRIPTION OF THE PRESENTLY PREFERRED EMBODIMENTS

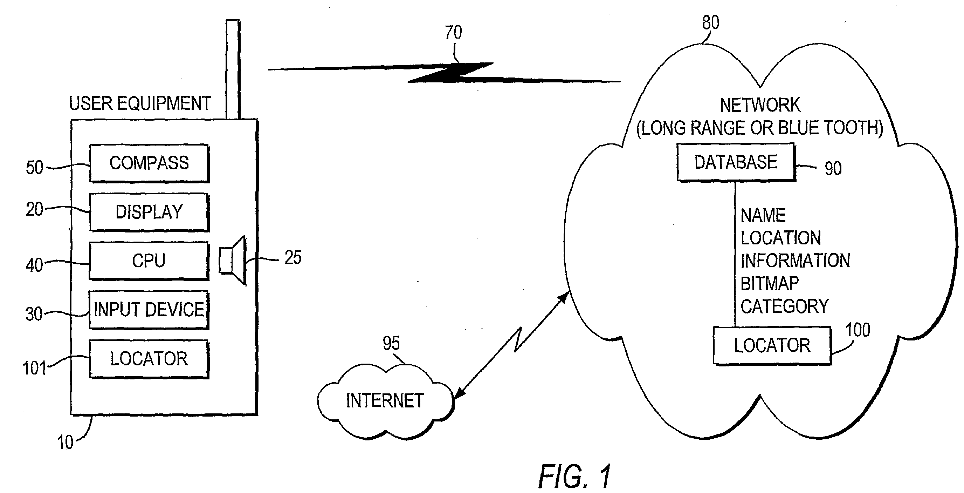

Fig. 1 is a block diagram showing a system in which the present invention is incorporated. A user equipment (UE) 10 comprises a mobile device with a display 20, a speaker 25 for providing audio signals to a user, an input device 30, a CPU 40, and a compass 50 for determining the orientation of the UE 10. The UE 10 is connected via a wireless connection 70 to a network 80 comprising a database 90 and a location service 100 for determining the geographic location of the UE 10.

Although the location service 100 is shown as being in the same network as the database 90, the location service may be a separate network or may be a separate system. For example, the location service 100 may comprise a Global Positioning Satellite (GPS) system in which a locator 101 is arranged in the user equipment 10. In Blue Tooth or other short range system, the locator 100 may be in the network and tell the user its position based on the connection. Furthermore, any locating system which utilizes the Base Transceiver Stations (BTSs) of a mobile communication system such as the Time of Arrival (TOA) positioning method, or the Observed Time Difference (OTD) positioning method (These positioning methods are described in technical specification GSM 03.71, version 7.2.1) may also be used. The location system 100 may comprise a cell ID based positioning method, Angle of Arrival (AOA) (see technical specification 3G TS 25.305, version 3.1.0), or any other method which may be used to determine the location of the UE 10. The network 80 may comprise a long range network such as those used for mobile phones or a short range network such as Blue Tooth. Furthermore, the network 90 may be connected to the internet 95. The UE 10 may comprise any type of mobile computing device such as personal digital assistants (PDAs) or a mobile phone with computing abilities. Furthermore, the UE 10 may comprise a wearable computer wherein the display 20 comprises a head-mounted display which allows the user to see a virtual data while simultaneously viewing the real world.

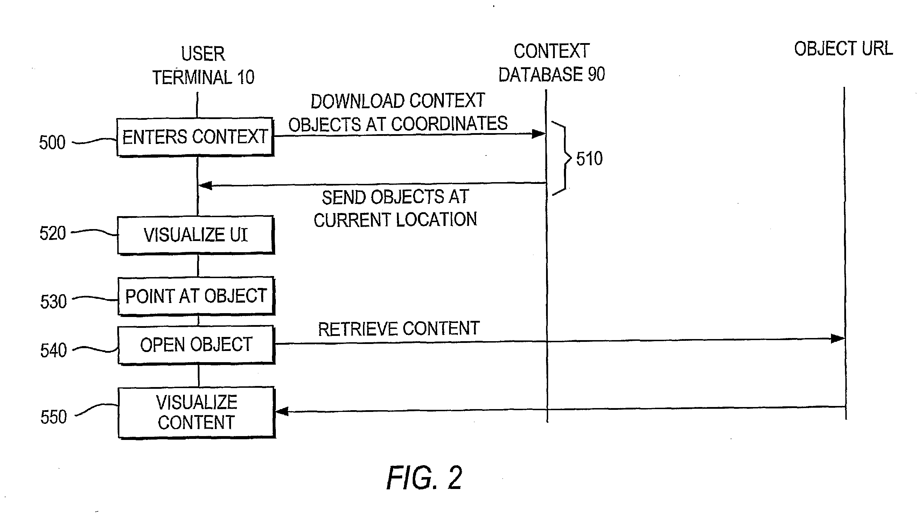

Referring to Fig. 2, the process of browsing and accessing contextual information according to the present invention is as follows: a location service 100 determines the geographic location of the UE, step 500. The coordinates are transmitted to the database 90 or are used in conjunction with the database 90 to download contextual data from the database 90 to the UE 10, step 510. The contextual data is a collection of virtual objects corresponding to real objects within a limited area surrounding the user's actual location. For each virtual object, the database preferably contains a record comprising at least a name of the object, a geographic location of the object in the real world, and information concerning the object. Instead of storing the information concerning the object, the database may instead or in addition include an internet address such as a Uniform Resource Locator (URL) or other remote computer address. The record may also contain a bit map for displaying an icon of the object. Furthermore, the record may also contain a type of object, i.e., a field in which a classification or category of the object is listed.

The downloaded contextual data may comprise all virtual objects in the database 90 within an area surrounding the user's location. The user may also select the size of the area of interest. For example, if the user is in a museum, the objects would include the artwork within the room in which the user is standing. The contextual data may alternatively include only those virtual objects in the database 90 which meet some criteria of the user. For example, the user may be looking for lodging for the night. Accordingly, the contextual data will include hotels, bed and breakfast inns, motels, hostels, and other places in which the user may stay for the night. In another example, the user may be looking for food and the contextual data will include restaurants and diners in the user's current neighborhood. To accomplish this, the records of the contextual data must include information in the classification field or category field.

Instead of static objects, such as buildings, monuments, or other points of interest, the objects may comprise dynamic objects such as the UE of a friend or the location of public transportation such as a bus or train.

When downloading the contextual data, the size of the limited area surrounding the user equipment must be known. The size may comprise a default value or may be based on criteria such as the speed of the movement of the user equipment and/or the density of virtual objects in the area. Furthermore the size may be user selectable via the input device 30. For example, if a user is standing still or moving at a walking pace, the area may comprise a relatively small radius such as 50-1000 meters. However, if the user is travelling faster such as at the speed of a motor vehicle on a highway, the area may comprise a larger radius such as 10 kilometers.

Furthermore, the density of virtual objects is likely to be greater in a city. Therefore, when the user is in a city, the limited area may be smaller than when a user is in a rural or suburban area. There may be a limit as to the capacity of virtual objects the user equipment can hold or display at one time. Accordingly, the limited area may also be adjusted based on the capacity of the user equipment to hold or display the contextual data.

Once the contextual data is downloaded, the compass 50 determines the direction in which the UE 10 is pointing and displays the accessible virtual objects that are within the limited area, step 520. The virtual object directly in front of the user is highlighted or selected and can be accessed by pushing or otherwise actuating an activation button on the input device 30. As the UE 10 changes orientation, different virtual objects move in front of the user. Therefore, to select or point to a virtual object to be accessed the user merely changes the orientation of the UE 10 until the virtual object to be accessed lies in a target space or a selection area in front of the UE 10, i.e., the user aligns the UE 10 with the virtual object to accessed, step 530. The input device 30 may then be actuated to open the selected object, i.e., retrieve the content of the selected object associated with the selected object, step 540. Finally, the content is displayed on the display, step 550.

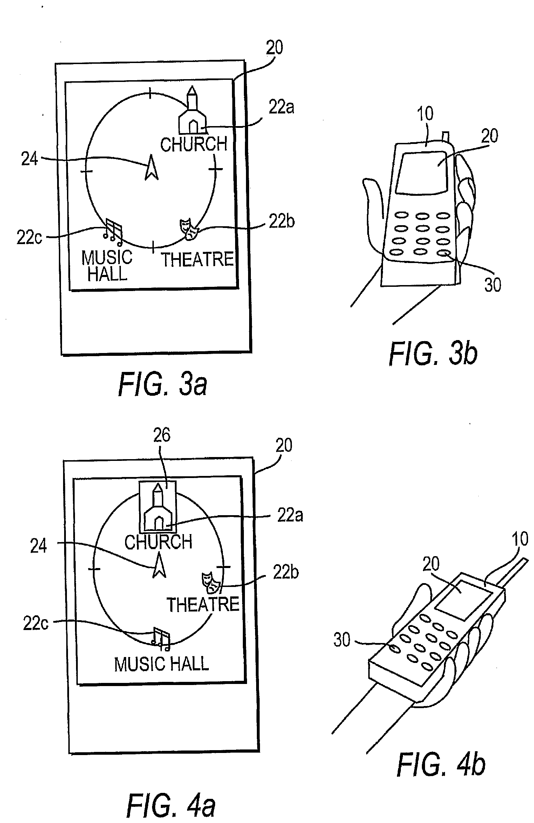

Fig. 3a shows the display 20 when the UE 10 is a mobile phone. In this display, the orientation of the UE 10 is shown by an arrow 24. Fig. 3b shows the position of the UE 10. Here, a church is to the right of the UE 10 and a music hall and a theatre are behind the UE 10. Fig. 4a shows the display 20 and Fig. 4b shows the relative position of the UE 10 after the UE has been rotated to the right so that the church icon 22a is now in a target space 26 in front of the UE 10. Accordingly, the church icon 22a is now highlighted and can be accessed by pushing a button on the input device 30 of the mobile phone associated with that function.

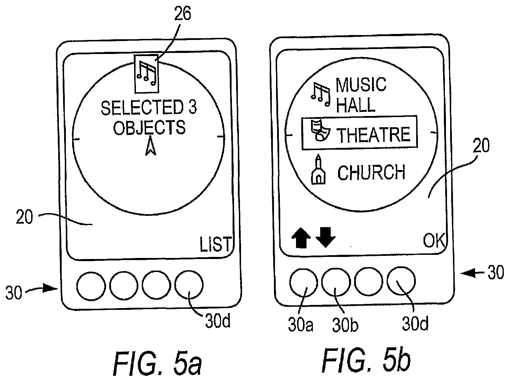

Since the amount of information that can be displayed on a mobile phone display is limited, only one object is shown in one direction. However, if more than one object lies in front of the user, the user may be informed of this visually and/or aurally and a list may be displayed so that the user can choose which object in the target space 26 is to be accessed. Fig. 5a shows the display 20 when more than one object is in front of the UE 10. A button 30d and the input device 30 associated with the list function may be actuated to show the list of selected objects. Fig. 5b shows the display 20 when the list of selected objects are shown. The input device 30 may have buttons 30a and 30b associated with up and down functions to select an item on the list. Furthermore, the button 30d or any other button on the input device 30 may function as an activation button for activating the selected virtual object when the list display is shown.

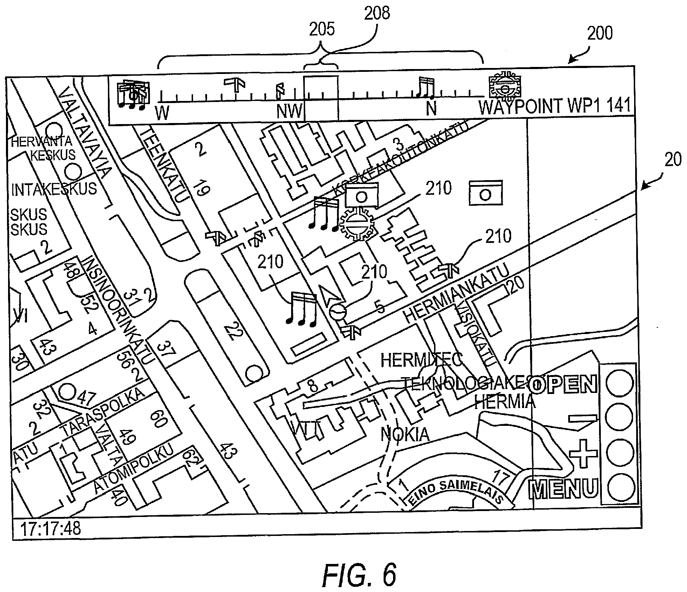

Referring to Fig. 6, when the UE 10 comprises a PDA, the display 20 shows more details. In this embodiment, the display 20 may show a map showing the virtual objects 210 surrounding the user. The top of the display 20 comprises a linear compass 200 which shows objects in a field-of-view 205 in front of the user. In Fig. 6, the field-of-view 205 of the linear compass 200 covers an angle of approximately 110 degrees. However, a larger or smaller field of view 205 could also be used depending on the particular application or the user's preference up to and including 360 degrees. In this embodiment, virtual objects 210 are shown as icons on the display at a location of the real objects they are associated with. The icons are also shown in the linear compass 200 based on the direction to them from the user equipment. Accordingly, if the field-of-view is less than 360 degrees, only those icons associated with real objects within the field of view will be displayed. As in the previous embodiment, the user selects an object by pointing the UE 10, i.e., aligning the UE 10 so that the object is in front of the UE 10. In this embodiment, an object is selected when it is aligned within a target area 208 on the linear compass 200. The target area 208 is aligned with the front of the UE 10.

Another method for selecting one of the virtual objects may comprise using buttons which correspond to directions such as up, down, left, and right, on the input device 30 to jump from one virtual object to the next adjacent one in the input direction on the map shown on the display 20. This method eliminates the requirement of the user to reorient the UE 10 each time the user wishes to select a different virtual object.

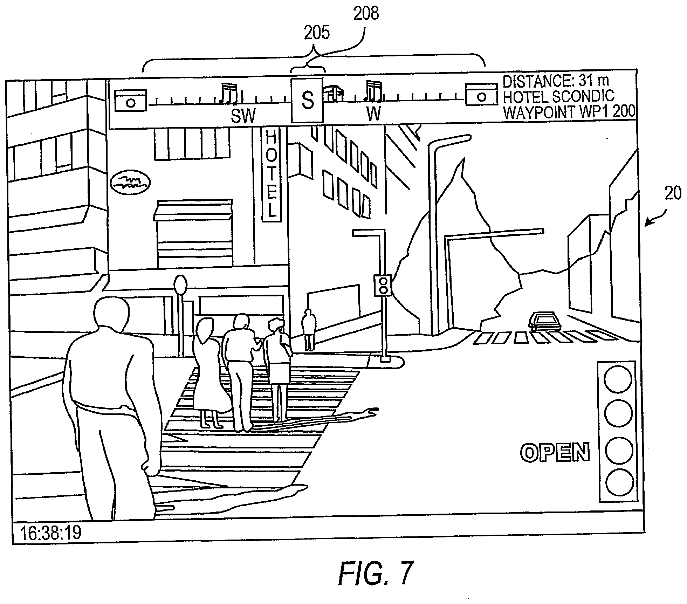

Alternatively, as shown in Fig. 7, the display comprise a head mounted display which allows the user to see virtual data while simultaneously viewing the real world. These head-mounted displays are commercially available. In this example, the user views the linear compass 200 while simultaneously viewing the real world. The linear compass 200 shows the user the virtual objects within the field-of-view 205 of the compass that are accessible. In this embodiment, the user wears the display which must have mounted thereto an actual compass. Accordingly, the user selects objects by rotating his head. In Fig. 7, the user has selected the Hotel Scandic. If the user wishes to access the virtual object, the input device (not shown in Fig. 7) is actuated. Fig. 7 further shows that the linear compass 200 may show an information area 215 in which information regarding the selected virtual object is displayed such as distance of the selected virtual object from the user location, name of the selected virtual object, and the compass point of the selected virtual object.

In each of the above examples, the network has been a long range network. However, a short range network such as Blue Tooth may also be used in indoor applications. For example, instead of displaying points of interest in a city, the short range system may display other electronic devices in a room with which the UE 10 can communicate such as a telephone, a printer, or a coffee maker.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the scope of the invention. It is the intention, therefore, to be limited only as indicated by the scope of the claims appended hereto.

## Claims

1. A hand held mobile device (10) for browsing and accessing contextual information stored in a database (90) accessible through a wireless network, comprising:
means for wireless communication with the wireless network;
a display (20);
an input device (30);
a compass (50) for determining an orientation of the hand held mobile device (10);
a location determination means for determining the location of the hand held mobile device (10);
a CPU (40) comprising means for downloading contextual information from the database corresponding to real objects, said contextual information including virtual objects (210) related to real objects in an area surrounding the location of the hand held mobile device (10), and means for displaying the virtual objects (210) on said display (20) relative to a position of the hand held mobile device (10);
charterised in that
the hand held mobile device (10) comprising means for selecting from the displayed virtual objects (210) a virtual object to be accessed by aligning the hand held mobile device with the virtual object to be accessed until the virtual object to be accessed lies in a target space (26) of the display (20), wherein said aligning depends upon the determined orientation of the hand held mobile device (10) and wherein the target space corresponds to a front of the hand held mobile device (10);
the hand held mobile device (10) comprising means for accessing the selected virtual object (210) to be accessed by opening the selected virtual object (210) and displaying at least a portion of content of the selected virtual object on the display (20) in response to an actuation of said input device (30).

2. The hand held mobile device according to claim 1, wherein said content of the selected virtual object is stored in the hand held mobile device.

3. The hand held mobile device according to claim 1, wherein said opening the selected virtual object comprises one of:
- retrieving the content of the selected virtual object from the database of a wireless system; and
- retrieving the content of the selected virtual object from another database in one of the wireless network and another computer; and
- retrieving the content of the selected virtual object using a URL associated with the selected virtual object.

4. The hand held mobile device according to claim 1, wherein the downloaded contextual information corresponding to real objects comprises for each virtual object at least one of:
- a name of the object,
- a geographic location of the object in the real word,
- information concerning the object or an internet address associated with the object, and
- a type of object, in particular a field in which a classification or category of the object is listed.

5. The hand held mobile device according to one of the preceding claims, wherein the downloaded contextual information corresponding to real objects includes only those virtual objects in the database which meet some criteria of a user.

6. The hand held mobile device according to any of the preceding claims, wherein the location determination means for determining the location of the hand held mobile device comprises a GPS locator.

7. The hand held mobile device according to any of the preceding claims, wherein said means for selecting a virtual object to be accessed are configured to highlight the virtual object to be accessed when the virtual object to be accessed is in the target space or selection area (26) of the display (20).

8. The hand held mobile device according to claim 7, wherein said highlighing comprises highlighting a list of objects when more than one object is in the target space.

9. The hand held mobile device according to any of the preceding claims, comprising a speaker (25) for providing audio signals to a user.

10. The hand held mobile device according to any of the preceding claims, further comprising means for selecting a size of the area surrounding the location of the hand held mobile device depending on a user selection via said input device.

11. The hand held mobile device according to any of claims 1 to 10, wherein a size of said area surrounding the location of said hand held mobile device is dependent on a speed of said hand held mobile device.

12. The hand held mobile device according to any of claims 1 to 11, wherein a size of said selected area surrounding the location of said user equipment is dependent on a density of said virtual objects.

13. The hand held mobile device according to any of the preceding claims, wherein the downloaded virtual objects comprise dynamic objects such as a user equipment of a friend or the location of the public transportation.

14. The hand held mobile device according to any of the preceding claims, wherein the hand held mobile device is a personal digital assistant, comprising means for displaying a map showing the virtual objects in a field-of-view (205).

15. The hand held mobile device according to any of claims 1 to 13, wherein the hand held mobile device is a mobile phone or a personal digital assistant.

16. A method for browsing and accessing contextual information with a hand held mobile device (10), said contextual information containing virtual objects related to an area surrounding the hand held mobile device (10), said method comprising:
determining a location of the hand held mobile device (10) using location determination means arranged in the hand held mobile device (10);
determining an orientation of the hand held mobile device (10) using a compass arranged in the hand held mobile device (10);
downloading, at the hand held mobile device (10), contextual information containing virtual objects corresponding to real objects in an area surrounding the hand held mobile device (10) from a database accessible through a wireless network;
generating a visual user interface at the hand held mobile device (10) for displaying the downloaded virtual objects (210) in the visual user interface relative to a position of the hand held mobile device (10);
**characterised by**
selecting from the displayed virtual objects (210) a virtual object to be accessed by aligning the hand held mobile device with the virtual object to be accessed until the virtual object to be accessed lies in a target space (26) of the visual user interface, wherein said aligning depends upon the determined orientation of the hand held mobile device (10) and wherein the target space corresponds to a front of the hand held mobile device (10): and
accessing the selected virtual object (210) to be accessed by opening the selected virtual object (210) and displaying at least a portion of content of the selected virtual object in the visual user interface in response to an actuation of said input device (30).

17. The method according to claim 16, wherein said content of the selected virtual object is stored in the hand held mobile device.

18. The method according to claim 16, wherein said opening the selected virtual object comprises one of:
- retrieving the content of the selected virtual object from the database of a wireless system; and
- retrieving the content of the selected virtual object from another database in one of the wireless network and another computer; and
- retrieving the content of the selected virtual object using a URL associated with the selected virtual object.

19. The method according to claim 16, wherein the downloaded contextual information corresponding to real objects comprises for each virtual object at least one of:
- a name of the object,
- a geographic location of the object in the real word,
- information concerning the object or an internet address associated with the object, and
- a type of object, in particular a field in which a classification or category of the object is listed.

20. The method according to any of claims 16 to 19, wherein the downloaded contextual information corresponding to real objects includes only those virtual objects in the database which meet some criteria of a user.

21. The method according to any of claims 16 to 20, wherein the location determination means for determining the location of the hand held mobile device comprises a GPS locator.

22. The method according to any of claims 16 to 21, wherein said selecting a virtual object to be accessed comprises highlighting the virtual object to be accessed when the virtual object to be accessed is in the target space or selection area (26) of the visual user interface.

23. The method according to claim 22, wherein said highlighing comprises highlighting a list of objects when more than one object is in the target space.

24. The method according to any of claims 16 to 23, comprising providing audio signals to a user via a speaker (25) of the hand held mobile device.

25. The method according to any of claims 16 to 24, comprising selecting a size of the area surrounding the location of the hand held mobile device depending on a user selection via said input device.

26. The method according to any of claims 16 to 24, comprising determining a size of the area surrounding the hand held mobile device relative to a speed of movement of the hand held mobile device.

27. The method according to any of claims 16 to 24, comprising determining a size of the area surrounding the hand held mobile device relative to a density of virtual objects.

28. The method according to any of claims 16 to 27, wherein the downloaded virtual objects comprise dynamic objects such as a user equipment of a friend or the location of the public transportation.

29. The method according to any of claims 16 to 28, wherein the hand held mobile device is a personal digital assistant, tbe method comprising displaying a map showing the virtual objects in a field-of-view (205) in the visual user interface.

30. The method according to any of claims 16 to 28, wherein the hand held mobile device is a mobile phone or a personal digital assistant.

## Patentansprüche

1. Tragbare mobile Vorrichtung (10) zum Browsen durch und Zugreifen auf kontextbezogene Informationen, die in einer Datenbank (90) gespeichert sind, die durch ein drahtloses Netz zugänglich ist, die umfasst:
Mittel zur drahtlosen Kommunikation mit dem drahtlosen Netz;
eine Anzeige (20);
eine Eingabevorrichtung (30);
einen Kompass (50) zum Bestimmen einer Orientierung der tragbaren mobilen Vorrichtung (10);
Ortsbestimmungsmittel zum Bestimmen des Ortes der tragbaren mobilen Vorrichtung (10);
eine CPU (40), die Mittel zum Herunterladen der kontextbezogenen Informationen von der Datenbank entsprechend echten Objekten, wobei die kontextbezogenen Informationen virtuelle Objekte (210) enthalten, die mit den echten Objekten in einem Bereich in Beziehung stehen, der den Ort der tragbaren mobilen Vorrichtung (10) umgibt, und Mittel zum Anzeigen der virtuellen Objekte (210) auf der Anzeige (20) bezüglich einer Position der tragbaren mobilen Vorrichtung (10) umfasst;
**dadurch gekennzeichnet, dass**
die tragbare mobile Vorrichtung (10) Mittel zum Auswählen aus den angezeigten virtuellen Objekten (210) eines virtuellen Objekts, auf das zuzugreifen ist, durch das Ausrichten der tragbaren mobilen Vorrichtung (10) auf das virtuelle Objekt, auf das zuzugreifen ist, bis das virtuelle Objekt, auf das zuzugreifen ist, in einem Zielraum (26) der Anzeige (20) liegt, umfasst, wobei das Ausrichten von der bestimmten Orientierung der tragbaren mobilen Vorrichtung (10) abhängt und wobei der Zielraum einer Vorderseite der tragbaren mobilen Vorrichtung (10) entspricht;
die tragbare mobile Vorrichtung (10) Mittel zum Zugreifen auf das ausgewählte virtuelle Objekt (210), auf das zuzugreifen ist, durch das Öffnen des ausgewählten virtuellen Objekts (210) und das Anzeigen wenigstens eines Teils des Inhalts des ausgewählten virtuellen Objekts auf der Anzeige (20) in Reaktion auf eine Betätigung der Eingabevorrichtung (30) umfasst.

2. Tragbare mobile Vorrichtung nach Anspruch 1, wobei der Inhalt des ausgewählten virtuellen Objekts in der tragbaren mobilen Vorrichtung gespeichert ist.

3. Tragbare mobile Vorrichtung nach Anspruch 1, wobei das Öffnen des ausgewählten virtuellen Objekts eines des Folgenden umfasst:
- Wiedergewinnen des Inhalts des ausgewählten virtuellen Objekts von der Datenbank eines drahtlosen Systems; und
- Wiedergewinnen des Inhalts des ausgewählten virtuellen Objekts von einer weiteren Datenbank in einem des drahtlosen Netzes und eines weiteren Computers; und
- Wiedergewinnen des Inhalts des ausgewählten virtuellen Objekts unter Verwendung eines URL, der dem ausgewählten virtuellen Objekt zugeordnet ist.

4. Tragbare mobile Vorrichtung nach Anspruch 1, wobei die heruntergeladenen kontextbezogenen Informationen, die echten Objekten entsprechen, für jedes virtuelle Objekt wenigstens eines des Folgenden umfassen:
- einen Namen des Objekts,
- einen geographischen Ort des Objekts in der echten Welt,
- Informationen bezüglich des Objekts oder eine Internetadresse, die dem Objekt zugeordnet ist, und
- einen Typ des Objekts, insbesondere ein Gebiet, in dem eine Klassifikation oder eine Kategorie des Objekts aufgelistet ist.

5. Tragbare mobile Vorrichtung nach einem der vorhergehenden Ansprüche, wobei die heruntergeladenen kontextbezogenen Informationen, die den echten Objekten entsprechen, nur jene virtuellen Objekte in der Datenbank enthalten, die einigen Kriterien eines Anwenders entsprechen.

6. Tragbare mobile Vorrichtung nach einem der vorhergehenden Ansprüche, wobei die Ortsbestimmungsmittel zum Bestimmen des Ortes der tragbaren mobilen Vorrichtung einen GPS-Lokalisierer umfassen.

7. Tragbare mobile Vorrichtung nach einem der vorhergehenden Ansprüche, wobei die Mittel zum Auswählen eines virtuellen Objekts, auf das zuzugreifen ist, konfiguriert sind, das virtuelle Objekt, auf das zuzugreifen ist, hervorzuheben, wenn sich das virtuelle Objekt, auf das zuzugreifen ist, in dem Zielraum oder dem Auswahlbereich (26) der Anzeige (20) befindet.

8. Tragbare mobile Vorrichtung nach Anspruch 7, wobei das Hervorheben das Hervorheben einer Liste von Objekten umfasst, wenn sich mehr als ein Objekt in dem Zielraum befindet.

9. Tragbare mobile Vorrichtung nach einem der vorhergehenden Ansprüche, die einen Lautsprecher (25) zum Bereitstellen von Audiosignalen für einen Anwender umfasst.

10. Tragbare mobile Vorrichtung nach einem der vorhergehenden Ansprüche, die ferner Mittel zum Auswählen einer Größe des Bereichs, der den Ort der tragbaren mobilen Vorrichtung umgibt, in Abhängigkeit von einer Anwenderauswahl über die Eingabevorrichtung umfasst.

11. Tragbare mobile Vorrichtung nach einem der Ansprüche 1 bis 10, wobei eine Größe des Bereichs, der der den Ort der tragbaren mobilen Vorrichtung umgibt, von einer Geschwindigkeit der tragbaren mobilen Vorrichtung abhängig ist.

12. Tragbare mobile Vorrichtung nach einem der Ansprüche 1 bis 11, wobei eine Größe des ausgewählten Bereichs, der den Ort des Anwendergeräts umgibt, von einer Dichte der virtuellen Objekte abhängig ist.

13. Tragbare mobile Vorrichtung nach einem der vorhergehenden Ansprüche, wobei die heruntergeladenen virtuellen Objekte dynamische Objekte, wie z. B. ein Anwendergerät eines Freundes oder den Ort der öffentlichen Verkehrsmittel, umfassen.

14. Tragbare mobile Vorrichtung nach einem der vorhergehenden Ansprüche, wobei die tragbare mobile Vorrichtung ein persönlicher digitaler Assistent ist, der Mittel zum Anzeigen einer Karte umfasst, die die virtuellen Objekte in einem Gesichtsfeld (205) zeigt.

15. Tragbare mobile Vorrichtung nach einem der Ansprüche 1 bis 13, wobei die tragbare mobile Vorrichtung ein Mobiltelephon oder ein persönlicher digitaler Assistent ist.

16. Verfahren zum Browsen durch und Zugreifen auf kontextbezogene Informationen mit einer tragbaren mobilen Vorrichtung (10), wobei die kontextbezogenen Informationen virtuelle Objekte enthalten, die mit einem Bereich, der die tragbare mobile Vorrichtung (10) umgibt, in Beziehung stehen, wobei das Verfahren Folgendes umfasst:
Bestimmen eines Ortes der tragbaren mobilen Vorrichtung (10) unter Verwendung von Ortsbestimmungsmitteln, die in der tragbaren mobilen Vorrichtung (10) angeordnet sind;
Bestimmen einer Orientierung der tragbaren mobilen Vorrichtung (10) unter Verwendung eines Kompasses, der in der tragbaren mobilen Vorrichtung (10) angeordnet ist;
Herunterladen an der tragbaren mobilen Vorrichtung (10) kontextbezogener Informationen, die virtuelle Objekte enthalten, die echten Objekten in einem Bereich, der die tragbare mobile Vorrichtung (10) umgibt, entsprechen, von einer durch ein drahtloses Netz zugänglichen Datenbank;
Erzeugen einer visuellen Anwenderschnittstelle auf der tragbaren mobilen Vorrichtung (10) zum Anzeigen der heruntergeladenen virtuellen Objekte (210) in der visuellen Anwenderschnittstelle bezüglich einer Position der tragbaren mobilen Vorrichtung (10),
**gekennzeichnet durch**
Auswählen aus den angezeigten virtuellen Objekten (210) eines virtuellen Objektes, auf das zuzugreifen ist, durch das Ausrichten der tragbaren mobilen Vorrichtung auf das virtuelle Objekt, auf das zuzugreifen ist, bis das virtuelle Objekt, auf das zuzugreifen ist, in einem Zielraum (26) der virtuellen Anwenderschnittstelle liegt, wobei das Ausrichten von der bestimmten Orientierung der tragbaren mobilen Vorrichtung (10) abhängt und wobei der Zielraum einer Vorderseite der tragbaren mobilen Vorrichtung (10) entspricht; und
Zugreifen auf das ausgewählte virtuelle Objekt (210), auf das zuzugreifen ist, durch das Öffnen des ausgewählten virtuellen Objekts (210) und das Anzeigen wenigstens eines Teils des Inhalts des ausgewählten virtuellen Objekts in der virtuellen Anwenderschnittstelle in Reaktion auf eine Betätigung der Eingabevorrichtung (30).

17. Verfahren nach Anspruch 16, wobei der Inhalt des ausgewählten virtuellen Objekts in der tragbaren mobilen Vorrichtung gespeichert ist.

18. Verfahren nach Anspruch 16, wobei das Öffnen des ausgewählten virtuellen Objekts eines des Folgenden umfasst:
- Wiedergewinnen des Inhalts des ausgewählten virtuellen Objekts von der Datenbank eines drahtlosen Systems; und
- Wiedergewinnen des Inhalts des ausgewählten virtuellen Objekts von einer weiteren Datenbank in einem des drahtlosen Netzes und eines weiteren Computers; und
- Wiedergewinnen des Inhalts des ausgewählten virtuellen Objekts unter Verwendung eines URL, der dem ausgewählten virtuellen Objekt zugeordnet ist.

19. Verfahren nach Anspruch 16, wobei die heruntergeladenen kontextbezogenen Informationen, die echten Objekten entsprechen, für jedes virtuelle Objekt wenigstens eines des Folgenden umfassen:
- einen Namen des Objekts,
- einen geographischen Ort des Objekts in der echten Welt,
- Informationen bezüglich des Objekts oder eine Internetadresse, die dem Objekt zugeordnet ist, und
- einen Typ des Objekts, insbesondere ein Gebiet, in dem eine Klassifikation oder eine Kategorie des Objekts aufgelistet ist.

20. Verfahren nach einem der Ansprüche 16 bis 19, wobei die heruntergeladenen kontextbezogenen Informationen, die den echten Objekten entsprechen, nur jene virtuellen Objekte in der Datenbank enthalten, die einigen Kriterien eines Anwenders entsprechen.

21. Verfahren nach einem der Ansprüche 16 bis 20, wobei die Ortsbestimmungsmittel zum Bestimmen des Ortes der tragbaren mobilen Vorrichtung einen GPS-Lokalisierer umfassen.

22. Verfahren nach einem der Ansprüche 16 bis 21, wobei das Auswählen eines virtuellen Objekts, auf das zuzugreifen ist, das Hervorheben des virtuellen Objekts, auf das zuzugreifen ist, umfasst, wenn sich das virtuelle Objekt, auf das zuzugreifen ist, in dem Zielraum oder dem Auswahlbereich (26) der visuellen Anwenderschnittstelle befindet.

23. Verfahren nach Anspruch 22, wobei das Hervorheben das Hervorheben einer Liste von Objekten umfasst, wenn sich mehr als ein Objekt in dem Zielraum befindet.

24. Verfahren nach einem der Ansprüche 16 bis 23, das das Bereitstellen von Audiosignalen für einen Anwender über einen Lautsprecher (25) der tragbaren mobilen Vorrichtung umfasst.

25. Verfahren nach einem der Ansprüche 16 bis 24, das das Auswählen einer Größe des Bereichs, der den Ort der tragbaren mobilen Vorrichtung umgibt, in Abhängigkeit von einer Anwenderauswahl über die Eingabevorrichtung umfasst.

26. Verfahren nach einem der Ansprüche 16 bis 24, das das Bestimmen einer Größe des Bereichs, der der den Ort der tragbaren mobilen Vorrichtung umgibt, bezüglich einer Geschwindigkeit der Bewegung der tragbaren mobilen Vorrichtung umfasst.

27. Verfahren nach einem der Ansprüche 16 bis 24, das das Bestimmen einer Größe des ausgewählten Bereichs, der die tragbare mobile Vorrichtung umgibt, bezüglich einer Dichte der virtuellen Objekte umfasst.

28. Verfahren nach einem der Ansprüche 16 bis 27, wobei die heruntergeladenen virtuellen Objekte dynamische Objekte, wie z. B. ein Anwendergerät eines Freundes oder den Ort der öffentlichen Verkehrsmittel, umfassen.

29. Verfahren nach einem der Ansprüche 16 bis 28, wobei die tragbare mobile Vorrichtung ein persönlicher digitaler Assistent ist, wobei das Verfahren das Anzeigen einer Karte umfasst, die die virtuellen Objekte in einem Gesichtsfeld (205) in der visuellen Anwenderschnittstelle zeigt.

30. Verfahren nach einem der Ansprüche 16 bis 28, wobei die tragbare mobile Vorrichtung ein Mobiltelephon oder ein persönlicher digitaler Assistent ist.

## Revendications

1. Dispositif mobile portable (10) pour parcourir et accéder à des informations contextuelles stockées dans une base de données (90) accessible par le biais d'un réseau sans fil, comprenant :
des moyens pour une communication sans fil avec le réseau sans fil ;
un écran (20) ;
un dispositif d'entrée (30) ;
une boussole (50) pour déterminer une orientation du dispositif mobile portable (10) ;
des moyens de localisation pour localiser le dispositif mobile portable (10) ;
une CPU (40) comprenant des moyens pour télécharger des informations contextuelles depuis la base de données qui correspondent à des objets réels, lesdites informations contextuelles comprenant des objets virtuels (210) liés à des objets réels dans une zone entourant la localisation du dispositif mobile portable (10), et des moyens for afficher les objets virtuels (210) à l'écran (20) par rapport à une position du dispositif mobile portable (10) ;
**caractérisé en ce que**
le dispositif mobile portable (10) comprend des moyens pour sélectionner parmi les objets virtuels (210) affichés un objet virtuel auquel on veut accéder par l'alignement du dispositif mobile portable sur l'objet virtuel auquel on veut accéder jusqu'à ce que l'objet virtuel auquel on veut accéder se trouve dans un espace cible (26) de l'écran (20), ledit alignement dépendant de l'orientation déterminée du dispositif mobile portable (10), et l'espace cible correspondant à une face avant du dispositif mobile portable (10) ;
le dispositif mobile portable (10) comprend des moyens pour accéder à l'objet virtuel sélectionné (210) auquel on veut accéder par l'ouverture de l'objet virtuel sélectionné (210) et l'affichage d'au moins une partie de contenu de l'objet virtuel sélectionné à l'écran (20) en réponse à un actionnement dudit dispositif d'entrée (30).

2. Dispositif mobile portable selon la revendication 1, dans lequel ledit contenu de l'objet virtuel sélectionné est stocké sur le dispositif mobile portable.

3. Dispositif mobile portable selon la revendication 1, dans lequel ladite ouverture de l'objet virtuel sélectionné comprend une étape parmi :
- la récupération du contenu de l'objet virtuel sélectionné depuis la base de données d'un système sans fil ; et
- la récupération du contenu de l'objet virtuel sélectionné depuis une autre base de données, soit dans le réseau sans fil, soit sur un autre ordinateur ; et
- la récupération du contenu de l'objet virtuel sélectionné en utilisant une URL associée à l'objet virtuel sélectionné.

4. Dispositif mobile portable selon la revendication 1, dans lequel les informations contextuelles téléchargées correspondant à des objets réels comprennent pour chaque objet virtuel au moins un élément parmi :
- un nom de l'objet,
- une localisation géographique de l'objet dans le monde réel,
- des informations concernant l'objet ou une adresse internet associée à l'objet, et
- un type d'objet, en particulier un champ dans lequel est listée une classification ou une catégorie de l'objet.

5. Dispositif mobile portable selon l'une quelconque des revendications précédentes, dans lequel les informations contextuelles téléchargées correspondant à des objets réels ne comprennent que les objets virtuels dans la base de données qui remplissent certains critères d'un utilisateur.

6. Dispositif mobile, portable selon l'une quelconque des revendications précédentes, dans lequel les moyens de localisation pour localiser le dispositif mobile portable comprennent un localisateur GPS.

7. Dispositif mobile portable selon l'une quelconque des revendications précédentes, dans lequel lesdits moyens pour sélectionner un objet virtuel auquel on veut accéder sont configurés pour mettre en évidence l'objet virtuel auquel on veut accéder lorsque l'objet virtuel auquel on veut accéder se trouve dans l'espace cible ou la zone de sélection (26) de l'écran (20).

8. Dispositif mobile portable selon la revendication 7, dans lequel ladite mise en évidence comprend la mise en évidence d'une liste d'objets lorsque plus d'un objet se trouve dans l'espace cible.

9. Dispositif mobile portable selon l'une quelconque des revendications précédentes, comprenant un haut-parleur (25) pour fournir des signaux audio à un utilisateur.

10. Dispositif mobile portable selon l'une quelconque des revendications précédentes, comprenant en outre des moyens pour sélectionner une dimension de la zone entourant la localisation du dispositif mobile portable en fonction d'une sélection utilisateur par l'intermédiaire dudit dispositif d'entrée.

11. Dispositif mobile portable selon l'une quelconque des revendications 1 à 10, dans lequel une dimension de ladite zone entourant la localisation dudit dispositif mobile portable dépend d'une vitesse dudit dispositif mobile portable.

12. Dispositif mobile portable selon l'une quelconque des revendications 1 à 11, dans lequel une dimension de ladite zone sélectionnée entourant la localisation dudit équipement utilisateur dépend d'une densité desdits objets virtuels.

13. Dispositif mobile portable selon l'une quelconque des revendications précédentes, dans lequel les objets virtuels téléchargés comprennent des objets dynamiques, tels qu'un équipement utilisateur d'un ami ou la localisation des transports en commun.

14. Dispositif mobile portable selon l'une quelconque des revendications précédentes, dans lequel le dispositif mobile portable est un assistant numérique personnel comprenant des moyens pour afficher un plan montrant les objets virtuels dans un champ de vision (205) .

15. Dispositif mobile portable selon l'une quelconque des revendications 1 à 13, dans lequel le dispositif mobile portable est un téléphone mobile ou un assistant numérique personnel.

16. Procédé pour parcourir et accéder à des informations contextuelles avec un dispositif mobile portable (10), lesdites informations contextuelles contenant des objets virtuels concernant une zone entourant le dispositif mobile portable (10), ledit procédé comprenant :
la localisation du dispositif mobile portable (10) en utilisant des moyens de localisation agencés sur le dispositif mobile portable (10) ;
la détermination d'une orientation du dispositif mobile portable (10) en utilisant une boussole agencée sur le dispositif mobile portable (10) ;
le téléchargement, au niveau du dispositif mobile portable (10), d'informations contextuelles contenant des objets virtuels correspondant à des objets réels dans une zone entourant le dispositif mobile portable (10) depuis une base de données accessible par le biais d'un réseau sans fil ;
la génération d'une interface utilisateur virtuelle au niveau du dispositif mobile portable (10) pour afficher les objets virtuels (210) téléchargés à l'aide de l'interface utilisateur virtuelle par rapport à une position du dispositif mobile portable (10) ;
**caractérisé par**
la sélection parmi les objets virtuels affichés (210) d'un objet virtuel auquel on veut accéder par l'alignement du dispositif mobile portable sur l'objet virtuel auquel on veut accéder jusqu'à ce que l'objet virtuel auquel on veut accéder se trouve dans un espace cible (26) de l'interface utilisateur visuelle, ledit alignement dépendant de l'orientation déterminée du dispositif mobile portable (10) et l'espace cible correspondant à une face avant du dispositif mobile portable (10) ; et
l'accès à l'objet virtuel sélectionné (210) auquel on veut accéder par l'ouverture de l'objet virtuel sélectionné (210) et l'affichage d'au moins une partie de contenu de l'objet virtuel sélectionné à l'aide de l'interface utilisateur virtuelle en réponse à un actionnement dudit dispositif d'entrée (30).

17. Procédé selon la revendication 16, dans lequel ledit contenu de l'objet virtuel sélectionné est stocké sur le dispositif mobile portable.

18. Procédé selon la revendication 16, dans lequel ladite ouverture de l'objet virtuel sélectionné comprend une étape parmi :
- la récupération du contenu de l'objet virtuel sélectionné depuis la base de données d'un système sans fil ; et
- la récupération du contenu de l'objet virtuel sélectionné depuis une autre base de données, soit dans le réseau sans fil, soit sur un autre ordinateur ; et
- la récupération du contenu de l'objet virtuel sélectionné en utilisant une URL associée à l'objet virtuel sélectionné.

19. Procédé selon la revendication 16, dans lequel les informations contextuelles téléchargées correspondant à des objets réels comprennent pour chaque objet virtuel au moins un élément parmi :
- un nom de l'objet,
- une localisation géographique de l'objet dans le monde réel,
- des informations concernant l'objet ou une adresse internet associée à l'objet, et
- un type d'objet, en particulier un champ dans lequel est listée une classification ou une catégorie de l'objet.

20. Procédé selon l'une quelconque des revendications 16 à 19, dans lequel les informations contextuelles téléchargées correspondant à des objets réels ne comprennent que les objets virtuels dans la base de données qui remplissent certains critères d'un utilisateur.

21. Procédé selon l'une quelconque des revendications 16 à 20, dans lequel les moyens de localisation pour localiser le dispositif mobile portable comprennent un localisateur GPS.

22. Procédé selon l'une quelconque des revendications 16 à 21, dans lequel la sélection d'un objet virtuel auquel on veut accéder comprend la mise en évidence de l'objet virtuel auquel on veut accéder lorsque l'objet virtuel auquel on veut accéder se trouve dans l'espace cible ou la zone de sélection (26) de l'interface utilisateur visuelle.

23. Procédé selon la revendication 22, dans lequel ladite mise en évidence comprend la mise en évidence d'une liste d'objets lorsque plus d'un objet se trouve dans l'espace cible.

24. Procédé selon l'une quelconque des revendications 16 à 23, comprenant la fourniture de signaux audio à un utilisateur par l'intermédiaire d'un haut-parleur (25) du dispositif mobile portable.

25. Procédé selon l'une quelconque des revendications 16 à 24, comprenant la sélection d'une dimension de la zone entourant la localisation du dispositif mobile portable en fonction d'une sélection utilisateur par l'intermédiaire dudit dispositif d'entrée.

26. Procédé selon l'une quelconque des revendications 16 à 24, comprenant la détermination d'une dimension de la zone entourant le dispositif mobile portable par rapport à une vitesse de déplacement du dispositif mobile portable.

27. Procédé selon l'une quelconque des revendications 16 à 24, comprenant la détermination d'une dimension de la zone entourant le dispositif mobile portable par rapport à une densité d'objets virtuels.

28. Procédé selon l'une quelconque des revendications 16 à 27, dans lequel les objets virtuels téléchargés comprennent des objets dynamiques tels qu'un équipement utilisateur d'un ami ou la localisation des transports en commun.

29. Procédé selon l'une quelconque des revendications 16 à 28, dans lequel le dispositif mobile portable est un assistant numérique personnel, le procédé comprenant l'affichage d'un plan montrant les objets virtuels dans un champ de vision (205) à l'aide de l'interface utilisateur visuelle.

30. Procédé selon l'une quelconque des revendications 16 à 28, dans lequel le dispositif mobile portable est un téléphone mobile ou un assistant numérique personnel.
